## Europäisches Patentamt

## European Patent Office

## Office européen des brevets

(19)

(11) Veröffentlichungsnummer: **0 237 806**
**B1**

(12) **EUROPÄISCHE PATENTSCHRIFT**

(45) Veröffentlichungstag der Patentschrift:
20.12.89

(51) Int. Cl.⁴: **G01C 17/38**, G01R 33/025

(21) Anmeldenummer: 87102151.5

(22) Anmeldetag: 16.02.87

(54) **Verfahren und Einrichtung zur Kompensation eines magnetischen Störfeldes in einem Fahrzeug.**

(30) Priorität: 19.02.86 DE 3605294

(43) Veröffentlichungstag der Anmeldung:
23.09.87 Patentblatt 87/39

(45) Bekanntmachung des Hinweises auf die Patenterteilung:
20.12.89 Patentblatt 89/51

(84) Benannte Vertragsstaaten:
AT BE CH DE FR GB IT LI NL SE

(56) Entgegenhaltungen:
EP-A- 0 067 338

PATENT ABSTRACTS OF JAPAN, Band 5,
Nr. 175 (P-88)[847], 11. November 1981; &
JP-A-56 103 311

(73) Patentinhaber: Siemens Aktiengesellschaft,
Wittelsbacherplatz 2, D-8000 München 2(DE)

(72) Erfinder: Kappeller, Reinhard, Geigenbergerstrasse 27,
D-8000 München 71(DE)
Erfinder: Thilo, Peer, Dr. Ing., Buchhieristrasse 19,
D-8000 München 71(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Kompensation eines magnetischen Störfeldes bei der Richtungsbestimmung mittels einer Magnetfeldsonde in einem Fahrzeug, wobei mit der Sonde der Feldvektor des Erdmagnetfeldes laufend gemessen und zur Bestimmung der jeweiligen Fahrtrichtung ausgewertet wird und wobei zur Kompensation von Störeinflüssen lokaler Störmagnetfelder durch Eichmessungen ein Störfeldvektor ermittelt, gespeichert und bei den nachfolgenden Messungen jeweils von dem gemessenen Magnetfeldvektor subtrahiert wird, um den Erdfeldvektor zu erhalten.

Der Einsatz von Magnetfeldsonden zur Richtungsbestimmung in Fahrzeugen ist allgemein bekannt. Dabei kann die Sonde entweder nur als elektronischer Kompaß zur Anzeige der Fahrtrichtung oder in Verbindung mit einem Wegmesser zur Ortung und Navigation im Fahrzeug verwendet werden. Das Meßprinzip beruht darauf, daß mit zwei zueinander senkrechten Spulenwicklungen die Horizontalkomponente des Erdmagnetfeldes bestimmt werden kann, womit dann auch die Richtung des Fahrzeuges festliegt. Der Aufbau einer solchen Sonde ist beispielsweise in der EP-A-0 135 933, ein zugehöriges Meßverfahren in der EP-A-0 065 762 beschrieben.

Beim Einsatz einer Magnetfeldsonde in einem Fahrzeug mit metallischen Teilen und elektrischen Stromkreisen ist allerdings zu beachten, daß vom Fahrzeug selbst beachtliche Störfelder erzeugt werden, die das Erdmagnetfeld verzer ren bzw. diesem magnetische Gleichfelder überlagern. Insbesondere in Kraftfahrzeugen ist immer eine größere Zahl von Störquellen zu berücksichtigen. Die Einflüsse aller magnetischen Störfelder können aber mit einem gemeinsamen Störfeldvektor berücksichtigt werden, der von dem gemessenen Feldvektor vektoriell zu subtrahieren ist, um den tatsächlichen Verlauf des Erdmagnetfeldes, d. h. die Richtung der Erdmagnetfeldlinien, zu bestimmen. In der EP-A-0 067 338 ist ein derartiges Korrekturverfahren beschrieben, womit die lokalen Störfelder im Fahrzeug und gegebenenfalls auch länger anhaltende Störfelder von außen kompensiert werden können.

Zur Ermittlung des Störfeldvektors bei dem genannten Korrekturverfahren muß aber das Fahrzeug in einem Kreis oder zumindest in mehrere verschiedene Richtungen gefahren werden, da nur so die Ortskurve der Erdfeldvektion und damit Größe und Richtung des Störfeldvektors bestimmt werden können. Durch laufende Neuberechnung des Störfeldvektors während der Fahrt werden langsame Änderungen des Störfeldes, etwa Änderungen der magnetischen Eigenschaften der Karosseriebleche in der Nähe der Sonde durch Temperaturschwankungen, Erschütterungen oder durch längeres Parken in einer bestimmten Himmelsrichtung berücksichtigt. Dabei muß aber ausgeschlossen werden, daß sprunghafte Feldänderungen, wie sie beispielsweise durch Vorbeifahren an anderen Fahrzeugen oder an Gebäuden auftreten, in die Kompensationsrechnung eingehen, da hierdurch das Meßergebnis ruckartig stark verfälscht würde. In diesem Falle könnte der richtige Störfeldvektor (Korrekturvektor) erst nach einiger Zeit und nach mehreren Richtungsänderungen wieder gewonnen werden.

Andererseits gibt es im Fahrzeug bewegliche Teile aus ferromagnetischen Massen und elektrische Einrichtungen mit veränderbaren Magnetfeldern, die kompensiert werden müssen. Zwar wird man beim Einbau einer Sonde in einem Kraftfahrzeug darauf achten, daß diese möglichst weit von den während der Fahrt bewegten Teilen, wie Motor, Lenkung und Räder, entfernt angebracht wird; dabei hat sich ein Einbauort im Dachbereich des Fahrzeuges als zweckmäßig herausgestellt. Aber auch dort können Einrichtungen vorhanden sein, deren Magnetfeld sprungartig verändert wird. Zu denken ist dabei vor allem an ein Schiebedach, das durch mechanisches Öffnen und Schließen das Magnetfeld verändert, und an eine Heckscheibenheizung, die bei Inbetriebnahme ein starkes Störmagnetfeld erzeugt. Bringt man also die Sonde beispielsweise im Dachbereich des Kraftfahrzeuges möglichst weit nach hinten, um einen möglichst großen Abstand vom Schiebedach zu halten und damit dessen Störeinfluß weitgehend auszuschalten, so gerät sie auf jeden Fall in den Wirkungsbereich des Störmagnetfeldes von der Heckscheibenheizung.

Diese sprunghaft sich ändernden Störmagnetfelder im Fahrzeug sollen aber im Gegensatz zu kurzzeitig einwirkenden äußeren Feldern kompensiert werden, wobei mit dem Meßverfahren im Augenblick der sprunghaften Änderung des Magnetfeldes nicht erkennbar ist, ob es sich um einen kurzzeitigen äußeren Störeinfluß handelt, der in der Messung nicht berücksichtigt werden soll, oder ob es sich um eine bleibende Veränderung des internen Störfeldes handelt, die zu kompensieren ist.

Aufgabe der Erfindung ist es, ein Verfahren zur Störfeldkompensation der eingangs genannten Art und eine Einrichtung zur Durchführung dieses Verfahrens zu schaffen, wobei sprunghafte Änderungen des internen Magnetfeldes durch Fahrzeugeinrichtungen erkannt und schnell kompensiert werden können.

Erfindungsgemäß wird diese Aufgabe dadurch gelöst, daß für eine ein Störmagnetfeld erzeugende, in unterschiedliche definierte Zustände bringbare Fahrzeugeinrichtung je weils konstante Zusatz-Störfeldvektoren ermittelt und gespeichert werden und daß in Abhängigkeit vom Betriebszustand der betreffenden Fahrzeugeinrichtung der zugehörige Zusatz-Störfeldvektor aus dem Speicher abgerufen und bei der Auswertung der Meßergebnisse zum Störfeldvektor addiert wird.

Bei einer Ausführungsform des erfindungsgemäßen Verfahrens wird ein Zusatz-Störfeldvektor für einen eingeschalteten Laststromkreis im Fahrzeug gespeichert und in Abhängigkeit vom Einschaltzustand des Laststromkreises zum Störfeldvektor addiert. Vorzugsweise handelt es sich dabei um den Stromkreis einer Heckscheibenheizung.

Weiterhin kann bei dem erfindungsgemäßen Verfahren vorgesehen werden, daß für ein mechanisch verstellbares Fahrzeugteil, beispielsweise ein Schiebedach, Zusatz-Störfeldvektoren für mindestens zwei definierte Stellungen gespeichert werden und daß jeweils die aktuelle Stellung des Fahrzeugteils abgetastet und durch entsprechende Zuschaltung des gespeicherten Zusatz-Störfeldvektors berücksichtigt wird. Handelt es sich dabei um ein kontinuierlich verstellbares Fahrzeugteil, so kann ein Zusatz-Störfeldvektor dadurch ermittelt werden, daß für zwei oder mehr definierte Stellungen jeweils feste Zusatz-Störvektoren gespeichert und für eine jeweils aktuelle Zwischenstellung ein zugehöriger Zusatz-Störfeldvektor durch Interpolation errechnet wird.

Bei einer Einrichtung zur Richtungsbestimmung in einem Fahrzeug mit einer auf das Erdmagnetfeld ansprechenden Magnetfeldsonde und einer Auswerteeinrichtung, die mindestens einen Speicher zur Speicherung eines Störfeldvektors und eine Recheneinrichtung zur Aktualisierung des Störfeldvektors sowie zur Ermittlung eines korrigierten Magnetfeldvektors aus dem gemessenen Magnetfeldvektor und dem Störfeldvektor aufweist, wird die gestellte Aufgabe dadurch gelöst, daß ein Speicher für mindestens einen festen, einem definierten Betriebszustand einer veränderbaren Fahrzeugeinrichtung zugeordneten Zusatz-Störfeldvektor vorgesehen ist und daß eine Detektoreinrichtung zur Abtastung des jeweiligen Betriebszustandes der veränderbaren Fahrzeugeinrichtung mit der Auswerteeinrichtung verknüpft ist, derart, daß entsprechend dem Betriebszustand der veränderbaren Fahrzeugeinrichtung jeweils ein zugehöriger Zusatz-Störfeldvektor der Recheneinrichtung zugeführt wird.

Bei der veränderbaren Fahrzeugeinrichtung kann es sich um eine nur bedarfsweise in Betrieb genommene Laststromleitung handeln, wobei ein Zusatz-Störfeldvektor für den Einschaltzustand gespeichert ist und über die Detektoreinrichtung der in der Laststromleitung fließende Strom abgegriffen wird und als Zustandssignal an der Auswerteeinrichtung anliegt. Zweckmäßigerweise wird als Detektoreinrichtung ein Optokoppler verwendet, dessen Eingangskreis parallel zum Laststromkreis geschaltet ist und dessen Ausgangskreis an die Auswerteeinrichtung angeschaltet ist. Auf diese Weise wird vermieden, daß Störfrequenzen des Laststromkreises in die Auswerteeinrichtung übertragen werden. Zur weiteren Absicherung gegen Überlastung bzw. gegen Störspannungen können außerdem ein Vorwiderstand und ein Abblockkondensator vorgesehen werden.

Handelt es sich bei der veränderbaren Fahrzeugeinrichtung beispielsweise um ein Schiebedach, so werden zweckmäßigerweise Zusatz-Störvektoren für mindestens zwei definierte Stellungen des Schiebedaches gespeichert, und es wird ein Positionsdetektor vorgesehen, der die jeweilige Stellung des Schiebedaches abtastet und ein entsprechendes Positionssignal an die Auswerteeinrichtung gibt. Der Positionsdetektor kann beispielsweise in Form eines Potentiometers vorgesehen werden, welches durch die Transporteinrichtung des Schiebedaches betätigt wird. Auch eine optische Abtastung der Schiebebewegung ist möglich.

Die Erfindung wird nachfolgend an Ausführungsbeispielen anhand der Zeichnung näher erläutert.

Es zeigen

Fig. 1 ein Kraftfahrzeug mit einer schematisch dargestellten Magnetfeldsonde an verschiedenen Einbauorten,

Fig. 2 ein Blockschaltbild für eine erfindungsgemäße Kompensationsschaltung zur Kompensation des Störfeldes einer Heckscheibenheizung,

Fig. 3 ein Vektordiagramm mit den Komponenten des Erdmagnetfeldes,

Fig. 4 die Darstellung der Ortskurve eines in einem Fahrzeug gemessenen Erdfeldvektors mit Meßwertkorrektur,

Fig. 5 die Darstellung einer Schnellkorrektur des Störfeldvektors mit fest gespeichertem Zusatz-Störfeldvektor,

Fig. 6 eine Detektorschaltung zur Feststellung des Einschaltzustandes einer Heckscheibenheizung,

Fig. 7 und 8 zwei mögliche Positionsdetektoren für die Stellung eines Schiebedaches.

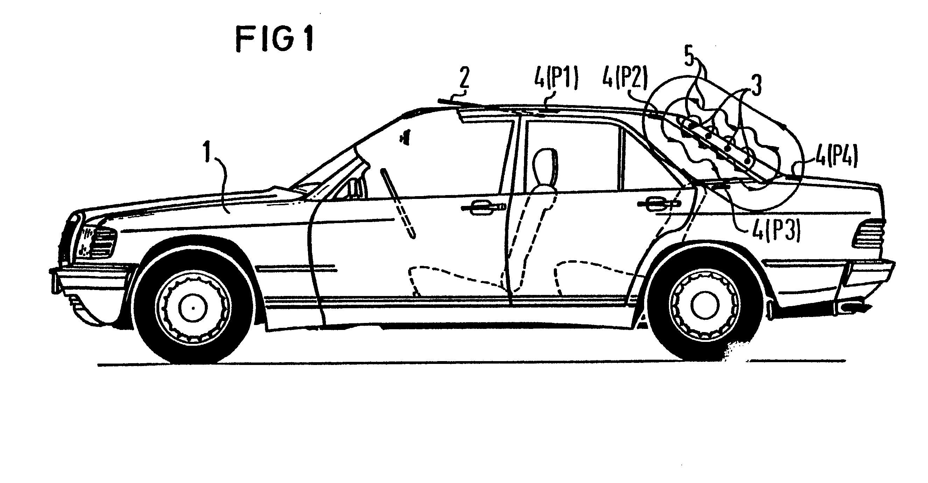

Fig. 1 zeigt ein in üblicher Weise ausgestattetes Kraftfahrzeug 1 mit einem Schiebedach 2 und einer Heckscheibenheizung 3 mit schematisch dargestellten Heizleitungen. In diesem Fahrzeug soll eine Magnetfeldsonde 4 möglichst günstig untergebracht werden, wobei verschiedene Positionen P1 bis P4 in Betracht kommen. Bei einem Fahrzeug ohne Schiebedach wäre beispielsweise die Position P1 am günstigsten, da sie weit weg von allen bewegten Teilen, wie Motor, Lenkung und Rädern, liegt und auch von der Heckscheibenheizung 3 einen ausreichenden Abstand besitzt, so daß deren Störmagnetfeld 5 (dargestellt durch schematisch gezeichnete Feldlinien) das Meßergebnis praktisch nicht beeinflußt. Ist jedoch das Schiebedach 2 vorhanden, erzeugt es selbst ein unterschiedlich großes Störmagnetfeld, je nachdem, ob es geschlossen oder geöffnet ist, wobei unterschiedliche Öffnungspositionen ebenfalls berücksichtigt werden müssen. Im Hinblick auf dieses Schiebedach 2 wäre also eine der Positionen P2, P3 oder P4 vorzuziehen, wobei jedoch wiederum das Störmagnetfeld 5 der Heckscheibenheizung berücksichtigt werden muß. Um nun für alle Fahrzeugtypen einen jeweils gleichen Einbauort festlegen zu können, ist es am günstigsten, die Sonde in einem möglichst großen Abstand von einem Störelement, beispielsweise vom Schiebedach 2, entfernt einzubauen und den Einfluß des anderen Störelementes, beispielsweise der Heckscheibenheizung, gezielt zu kompensieren. Eine solche Kompensation ist für die Heckscheibenheizung verhältnismäßig einfach durchzuführen, weil diese nur zwei definierte Zustände, nämlich einen Ausschaltzustand ohne Störmagnetfeld und einen Einschaltzustand mit Störmagnetfeld 5, aufweist, was elektrisch verhältnismäßig einfach festzustellen ist.

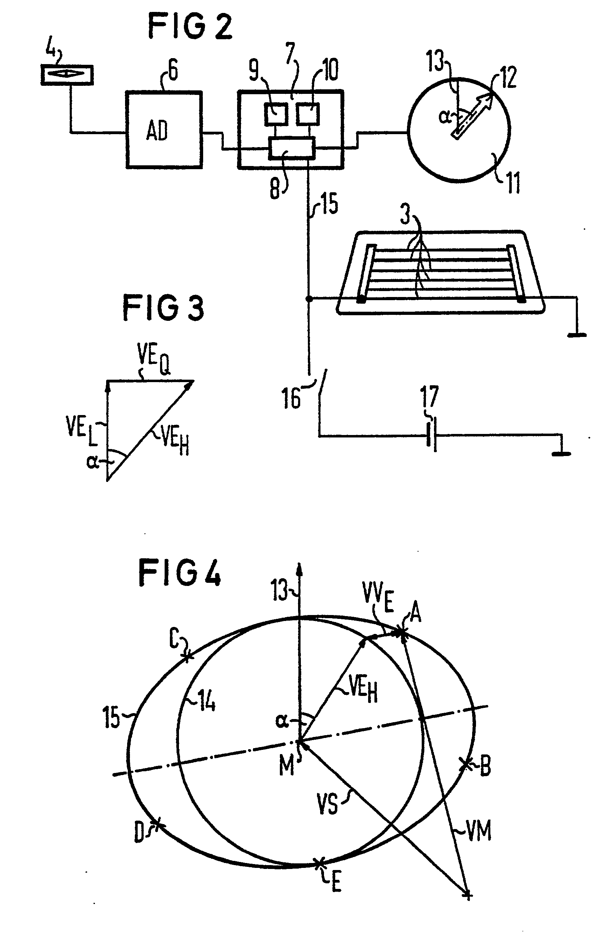

Fig. 2 zeigt in einem Blockschaltbild eine Kompensationsschaltung für eine Heckscheibenheizung bei einem elektronischen Kompaß. Dabei liefert die Magnetfeldsonde 4 analoge Meßwerte, die proportional zu den Vektorkomponenten $VE_L$ und $VE_Q$ sind (siehe Fig. 3). $VE_L$ stellt die Horizontalkomponente des Erdmagnetfeldes in Richtung der Fahrzeuglängsachse dar, $VE_Q$ die Horizontalkomponente quer zum Fahrzeug. Die Vektoraddition $VE_L + VE_Q$ liefert die Horizontalkomponente $VE_H$ des magnetischen Feldes der Erde bei waagerechtem, mit der Fahrzeuglängsachse fluchtendem Einbau der Sonde in das Fahrzeug. Da es sich hier um eine Richtungsbestimmung für flächengebundene Fahrzeuge, insbesondere Straßenfahrzeuge, handelt, genügt die Messung der Horizontalkomponente des Erdmagnetfeldes.

Der Kompaß soll nun den Winkel α zwischen der Fahrzeuglängsachse und der magnetischen Nordrichtung anzeigen; hierfür gilt die Beziehung

$$\alpha = arc\ tg\ \left|\frac{VE_Q}{VE_L}\right|$$

Die zur Berechnung von α erforderliche mathematische Operation wird in einer Auswerteschaltung 7 mit einer Recheneinrichtung 8, beispielsweise einem Mikroprozessor durchgeführt. Da dieser als Eingangsgrößen Meßwerte in digitaler Form benötigt, werden die Meßwerte der Magnetfeldsonde 4 in einem Analog-Digital-Wandler 6 in Digitalwerte umgesetzt. Dies geschieht beispielsweise mit einem Verfahren, wie es in der EP-A-0 065 762 beschrieben ist. Der in der Auswerteeinrichtung 7 berechnete Winkelwert a wird in einer Anzeigeeinrichtung 11 angezeigt, beispielsweise über einen veränderlichen Pfeil 12, der gegenüber der Fahrzeuglängsachse 13 den Winkel α einschließt.

In einer Umgebung, die von magnetischen Störfeldern und anderen, das Erdmagnetfeld verzerrenden Einflüssen frei ist, könnte der Winkel α unmittelbar aus den Meßwerten der Sonde 4 bzw. des Analog-Digital-Wandlers 6 gewonnen und angezeigt werden. In Kraftfahrzeugen ist jedoch immer eine größere Zahl von Störquellen vorhanden. Auch ortsfeste Störquellen, wie Gebäude und Leitungen, die Gleichströme führen, verzerren das magnetische Feld der Erde bzw. überlagern diesem magnetische Gleichfelder. Beim Vorbeifahren an solchen magnetischen Störquellen würde die Kompaßanzeige ebenso verfälscht werden wie durch die erwähnten Störfelder im Fahrzeug. Aus all diesen Gründen benötigt man Einrichtungen zur Störfeldkompensation, die über die Auswerteeinrichtung 7 zur Wirkung kommen.

In der bereits erwähnten EP-A-0 067 338 ist ein Korrekturverfahren beschrieben, bei dem Störeinflüsse, die in erster Linie auf die hart- und weichmagnetischen Eigenschaften von Fahrzeug-Karosserieteilen zurückzuführen sind, automatisch kompensiert werden. Das Kompensationsverfahren beruht nach der dortigen Beschreibung darauf, daß das Fahrzeug einmalig einen Kreisbogen fährt. Dabei bewegt sich die Spitze des gemessenen Erdfeldvektors $VE_H$ (Horizontalkomponente) im Idealfall auf einem Kreis 14 (siehe Fig. 4), in der Praxis aufgrund von Störeinflüssen jedoch auf einer mehr oder weniger ausgeprägten Ellipse 15. Die Ellipse ergibt sich dadurch, daß z. B. Karosseriebleche eine Flußverstärkung in eine bestimmte Richtung verursachen. Im allgemeinen muß man damit rechnen, daß sich die Spitze des Erdfeldvektors $VE_H$ auf einer elliptischen Ortskurve bewegt.

Für die automatische Störfeldkompensation genügt es auch, wenn das Fahrzeug statt einer einmaligen Kreisfahrt nach und nach in verschiedene Richtungen fährt. Die oben erwähnte Kreisfahrt dient nur dem leichteren Verständnis des Verfahrens. Bewegt sich das Fahrzeug auf einer beliebigen Fahrt z. B. zuerst in die Richtung A (Fig. 4), dann in die Richtung B, danach in die Richtungen C, D und E, so liegen fünf Meßpunkte vor, durch die die Größe, die Lage und das Achsenverhältnis der Ellipse mathematisch eindeutig bestimmt werden können. Dementsprechend werden im Fahrzeug 1 während der Fahrt fortlaufend Meßwerte für den Feldvektor bei jeder Fahrtrichtung ermittelt und gespeichert. So ergeben sich laufend weitere Punkte, mit denen die Recheneinrichtung 8 laufend die Lage und Form der Ellipse aus den ständig neu hinzukommenden Meßpunkten berechnen und aktualisieren kann. Insbesondere werden der Mittelpunkt M der Ellipse und mit ihm Betrag und Richtung des Störfeldvektors VS sowie der Vektor für die elliptische Verzerrung $VV_E$ bestimmt. Kennt man diese, so ergibt sich der gewünschte Erdfeldvektor $VE_H$ aus der Vektorgleichung

$$VE_H = VM - VS - VV_E.$$

Änderungen der magnetischen Eigenschaften der Karosseriebleche in Sondennähe, wie sie z. B. bei Temperaturschwankungen, Erschütterungen oder längerem Parken in einer bestimmten Himmelsrichtung eintreten, führen zu einer Verschiebung bzw. zu einer Formänderung der ermittelten Ellipse. Durch eine stetige Nachführung des Störfeldvektors VS und des Vektors für die elliptische Verzerrung $VV_E$ aufgrund der Messungen bei jeder Fahrt werden die genannten Störeinflüsse laufend kompensiert. Die Auswerteeinrichtung enthält hierzu einen Speicher 9, der den ständig aktualisierten Störfeldvektor VS und den Vektor für die elliptische Verzerrung $VV_E$ enthält.

Diese Art der Kompensation liefert befriedigende Ergebnisse, wenn die Änderungen der magnetischen Verhältnisse in der Sondenumgebung langsam und stetig verlaufen. Sprunghafte Änderungen dürften im allgemeinen aber nicht schnell korrigiert werden, weil sie auch auf Störeffekten beruhen können, deren Ursache außerhalb des Fahrzeuges zu suchen ist. Wird das magnetische Feld der Erde beispielsweise durch Fahrzeuge auf Nachbarfahrspuren oder durch Gebäude verzerrt, so werden die Meßwerte VM beim Vorbeifahren ruckartig verfälscht. Würde man bei der Einwirkung solcher Einflüsse schnell kompensieren, d. h., sofort neue Werte für den Störfeldvektor VS und den Vektor für die elliptische Verzerrung $VV_E$ berechnen, so würde die Kompensation verschlechtert werden. In diesem Falle würde man auch nach dem Passieren des kurzzeitigen Störfeldes mit einem falschen Kompensationswert weiterfahren, bis nach dem Durchfahren mehrerer Richtungsänderungen wieder der richtige Kompensationswert gewonnen werden könnte.

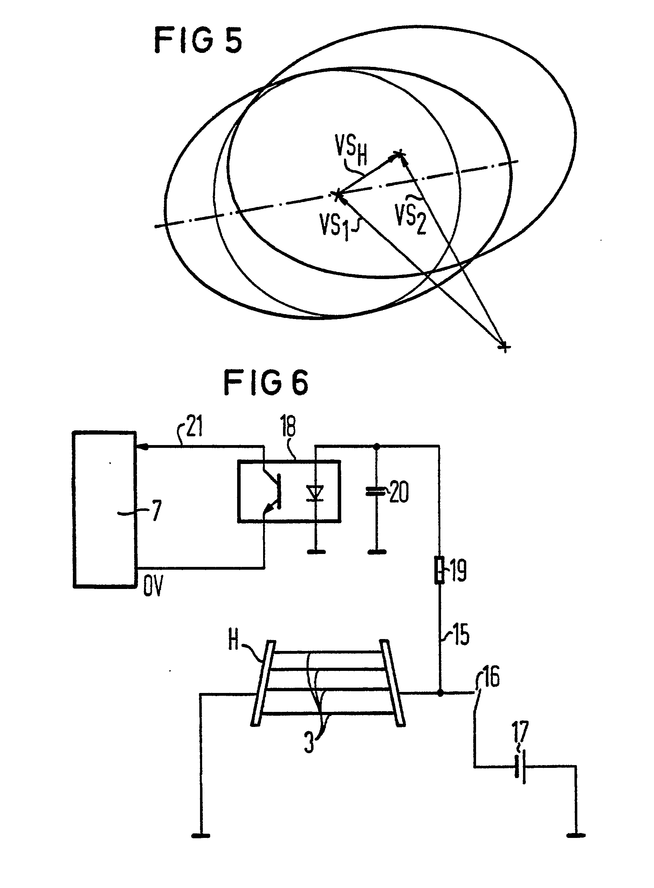

Wird das sprungartig auftretende Störmagnetfeld aber durch eine bleibende Änderung an einer fahrzeugeigenen Einrichtung hervorgerufen, beispielsweise durch Einschalten der Heckscheibenheizung oder durch Öffnen des Schiebedaches, so ist eine möglichst schnelle und genaue Kompensation notwendig. Dies ist auch möglich, wenn man Ursache und Größe des Störeinflusses genau kennt. Im Falle der Heckscheibenheizung beispielsweise trifft dieses zu. Die Lage der Stromleiter 3 in der Heckscheibe und ihr Abstand zu einer fest eingebauten Magnetfeldsonde, beispielsweise in Position P2 (Fig. 1), ändert sich nicht. Die Stromstärke des Heizstromes schwankt zwar mit der Spannung der Fahrzeugbatterie, die daraus resultierenden Feldstärkeänderungen ihres magnetischen Störfeldes 5 sind jedoch tolerierbar. Mit hinreichender Meßgenauigkeit kann man den Einfluß der Heckscheibenheizung mit einem konstanten Heckscheiben-Störfeldvektor $VS_H$ beschreiben, der gemäß Fig. 5 zum bisher ermittelten aktuellen Störfeldvektor VS hinzuaddiert wird und damit eine Verschiebung des Mittelpunkts der Ellipse bewirkt. Aus dem Störfeldvektor bei ausgeschalteter Heckscheibenheizung $VS_1$ ergibt sich dadurch der Störfeldvektor bei eingeschalteter Heizung $VS_2$ durch Addition des konstanten Störfeldvektors $VS_H$:

$$VS_2 = VS_1 + VS_H.$$

Damit die Recheneinrichtung 8 in der Auswerteeinrichtung 7 diese Rechnung durchführen kann, muß die Größe des Heckscheiben-Störfeldvektors $VS_H$ bekannt sein, außerdem muß über eine Detektorschaltung festgestellt werden, wann die Heckscheibenheizung eingeschaltet wird. Betrag und Winkel des Heckscheiben-Störfeldvektors $VS_H$ werden einmalig bei der Inbetriebnahme des Kompasses gemessen und in einem Speicher 10 in der Auswerteeinrichtung 7 gespeichert. Der Schaltzustand der Heckscheibenheizung wird der Recheneinrichtung 8 durch eine Verbindungsleitung 15 (Fig. 2) zur Heckscheibenheizung 3 mitgeteilt. Solange die Heckscheibenheizung 3 über den Schalter 16 an die Batterie 17 angeschaltet ist, fließt über den Parallelzweig 15 ein Stromsignal zur Auswerteeinrichtung 7. Solange dieses Signal an der Auswerteeinrichtung anliegt, wird aus dem Speicher 10 zum Störfeldvektor $VS_1$ der einmalig aufgenommene und fest abgespeicherte Heckscheiben-Störfeldvektor $VS_H$ zuaddiert.

Fig. 6 zeigt eine detailliertere Ausführungsform der Detektorschaltung. Die vom Stromkreis der Heckscheibenheizung 3 abgezweigte Signalleitung 15 ist über einen Optokoppler 18 an die Rechnereinrichtung 8 bzw. die Auswerteeinrichtung 7 angekoppelt. Auf diese Weise erfolgt eine Potentialtrennung, um Störspannungen auf der Ankopplungsleitung 15 nicht in der Auswerteschaltung wirksam werden zu lassen. Ein Vorwiderstand 19 schützt den Optokoppler 18 vor einer Überlastung. Außerdem ist ein Abblockkondensator 20 zum Optokoppler 18 parallel geschaltet, um zusätzlich Störspannungen zu unterdrücken. Das Ausgangssignal des Optokopplers 18 wird über die Leitung 21 direkt der Recheneinrichtung, also dem Mikroprozessor 8, zugeführt, die die Kompensationsrechnungen durchführt.

Neben der Kompensation von Störfeldern aus elektrischen Laststromkreisen können aber auch andere Störmagnetfelder kompensiert werden, die von mechanisch veränderbaren Fahrzeugeinrichtungen herrühren. Hierbei kann man für verschiedene Stellungen einer solchen Einrichtung, beispielsweise des Schiebedaches 2, jeweils unterschiedliche feste Störfeldvektoren im Speicher 10 speichern und je nach Stellung des Schiebedaches bei der Auswertung der Meßwerte berücksichtigen. Auch in diesem Fall muß der Zustand dieser Einrichtung über eine Detektoreinrichtung festgestellt werden. Besitzt beispielsweise ein Schiebedach nur zwei definierte Stellungen, so ist diese Feststellung verhältnismäßig einfach. Sind mehrere unterschiedliche Öffnungsstellungen möglich, so können hierfür ebenfalls mehrere unterschiedliche Störfeldvektoren im Speicher 10 niedergelegt und nach Bedarf berücksichtigt werden. Dabei ist es aber auch möglich, Zwischenstellungen durch Interpolation zu berücksichtigen.

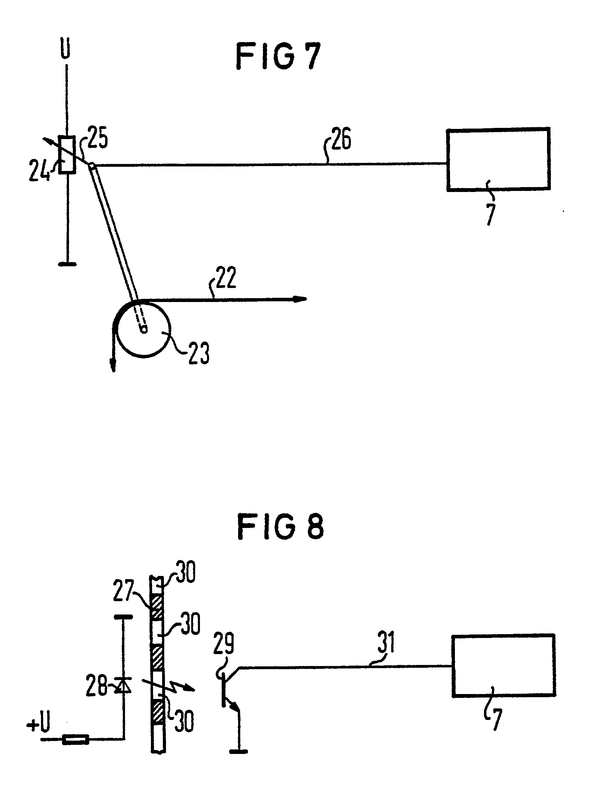

Zur Feststellung der genauen Stellung eines Schiebedaches sind verschiedene Detektoreinrichtungen anwendbar. Eine erste Möglichkeit ist schematisch in Fig. 7 gezeigt. Wird das Schiebedach beispielsweise über einen Seilzug 22 betätigt, so kann eine Umlenkrolle 23 des Seilzuges direkt mit einem Potentiometer 24 gekoppelt werden. Am Mittelabgriff 25 des Potentiometers liegt dann eine zur Stellung des Schiebedaches proportionale Spannung, die als Stellungssignal über die Leitung 26 der Auswerteeinrichtung 10 zugeführt wird.

Eine andere Möglichkeit für die Detektion der Schiebedachstellung ist in Fig. 8 schematisch gezeigt. Wird das Schiebedach beispielsweise über eine Zahnstange 27 betätigt, so kann über eine optische Abtastung die Verschiebung der Zahnstange festgestellt werden. In diesem Fall wird die Zahnstange zwischen einer Leuchtdiode 28 und einem Lichtempfänger 29 hindurchgeführt, so daß bei jedem Zahnzwischenraum 30 ein Lichtimpuls zum Empfänger 29 gelangt, der wiederum ein entsprechendes Signal über die Leitung 31 an die Auswerteeinrichtung 10 gibt. Durch Zählung der Impulse kann auch in diesem Fall die genaue Stellung des Schiebedaches ermittelt werden. Neben dieser optischen Abtastung sind natürlich auch andere Prinzipien, wie induktive Abtastung und dergleichen, anwendbar.

**Patentansprüche**

1. Verfahren zur Kompensation eines magnetischen Störfeldes bei der Richtungsbestimmung mittels einer Magnetfeldsonde in einem Fahrzeug, wobei mit der Sonde der Feldvektor des Erdmagnetfeldes laufend gemessen und zur Bestimmung der jeweiligen Fahrtrichtung ausgewertet wird und wobei zur Kompensation von Störeinflüssen lokaler Störmagnetfelder durch Eichmessungen ein Störfeldvektor ermittelt, gespeichert und bei den nachfolgenden Messungen jeweils von dem gemessenen Magnetfeldvektor subtrahiert wird, um den Erdfeldvektor zu erhalten, dadurch gekennzeichnet, daß für eine ein Störmagnetfeld erzeugende, in unterschiedliche definierte Zustände bringbare Fahrzeugeinrichtung (2, 3) jeweils konstante Zusatz-Störfeldvektoren (VS$_H$) ermittelt und gespeichert werden und daß in Abhängigkeit vom Betriebszustand der betreffenden Fahrzeugeinrichtung (2, 3) der zugehörige Zusatz-Störfeldvektor (VS$_H$) aus dem Speicher (10) abgerufen und bei der Auswertung der Meßergebnisse zum Störfeldvektor (VS$_I$) addiert wird.

2. Verfahren nach Anspruch 1, dadurch gekennzeichnet, daß ein Zusatz-Störfeldvektor (VS$_H$) für einen eingeschalteten Laststromkreis im Fahrzeug gespeichert und in Abhängigkeit vom Einschaltzustand des Laststromkreises zum Störfeldvektor addiert wird.

3. Verfahren nach Anspruch 2, dadurch gekennzeichnet, daß der Zusatz-Störfeldvektor (VS$_H$) dem Störmagnetfeld einer eingeschalteten Heckscheibenheizung (3) entspricht.

4. Verfahren nach Anspruch 1, dadurch gekennzeichnet, daß für ein mechanisch verstellbares Fahrzeugteil (2) Zusatz-Störfeldvektoren für mindestens zwei definierte Stellungen gespeichert werden, daß jeweils die aktuelle Stellung des Fahrzeugteils (2) abgetastet wird und daß entsprechend der so ermittelten Stellung der zugehörige Zusatz-Störfeldvektor zum aktuellen Störfeldvektor addiert wird.

5. Verfahren nach Anspruch 4, dadurch gekennzeichnet, daß für ein kontinuierlich verstellbares Fahrzeugteil (2) Zusatz-Störfeldvektoren für mindestens zwei definierte Endstellungen gespeichert werden, daß jeweils die aktuelle Stellung abgetastet wird und daß durch Interpolation aus den gespeicherten Werten der Zusatz-Störfeldvektoren ein Zusatz-Störfeldvektor errechnet und für die Messung berücksichtigt wird.

6. Einrichtung zur Richtungsbestimmung in einem Fahrzeug (1) mit einer auf das Erdmagnetfeld ansprechenden Magnetfeldsonde (4), einer Auswerteeinrichtung (7), die mindestens einen Speicher (9) zur Speicherung eines Störfeldvektors und eine Recheneinrichtung (8) zur Aktualisierung des Störfeldvektors und zur Ermittlung eines korrigierten Magnetfeldvektors aus dem gemessenen Magnetfeldvektor und dem Störfeldvektor aufweist, dadurch gekennzeichnet,
daß ein Speicher (10) für mindestens einen festen, einem definierten Betriebszustand einer veränderbaren Fahrzeugeinrichtung (2, 3) zugeordneten Zusatz-Störfeldvektor (VS$_H$) vorgesehen ist,
daß eine Detektoreinrichtung (15, 18; 24; 28, 29) zur Abtastung des jeweiligen Betriebszustandes der veränderbaren Fahrzeugeinrichtung (2, 3) mit der Auswerteeinrichtung (7) verknüpft ist, derart, daß entsprechend dem Betriebszustand der veränderbaren Fahrzeugeinrichtung jeweils ein zugehöriger Zusatz-Störfeldvektor der Recheneinrichtung (8) zugeführt wird.

7. Einrichtung nach Anspruch 6, dadurch gekennzeichnet, daß für eine im Fahrzeug (1) in der Nähe der Magnetfeldsonde (4) angeordnete, nur bedarfsweise in Betrieb genommene Laststromleitung (3) ein Zusatz-Störfeldvektor (VS$_H$) für den Einschaltzustand gespeichert ist und daß über die Detektoreinrichtung (15, 18) der in der Laststromleitung fließende Strom abgegriffen wird und als Zusatz-Störfeldsignal an der Auswerteeinrichtung (7) anliegt.

8. Einrichtung nach Anspruch 7, dadurch gekennzeichnet, daß die Detektoreinrichtung einen Optokoppler (18) aufweist, dessen Eingangskreis parallel zum Laststromkreis (3) geschaltet ist und dessen Ausgangskreis (21) an die Auswerteeinrichtung (7) angeschaltet ist.

9. Einrichtung nach Anspruch 8, dadurch gekennzeichnet, daß der Optokoppler (18) über einen Vorwiderstand (19) an den Laststromkreis angeschaltet ist.

10. Einrichtung nach Anspruch 8 oder 9, dadurch gekennzeichnet, daß parallel zum Optokoppler (18) ein Abblockkondensator (20) geschaltet ist.

11. Einrichtung nach Anspruch 6, dadurch gekennzeichnet, daß die veränderbare Fahrzeugeinrichtung ein Schiebedach (2) ist, wobei für mindestens zwei definierte Stellungen des Schiebedaches je ein Zusatz-Störfeldvektor gespeichert ist, und daß die Detektoreinrichtung einen Positionsdetektor (24; 28, 29) aufweist, der einen Meßwert für die aktuelle Stellung des Schiebedaches (2) an die Auswerteeinrichtung (7) gibt.

12. Einrichtung nach Anspruch 11, dadurch gekennzeichnet, daß mit der Transporteinrichtung (22, 23) des Schiebedaches (2) ein Potentiometer (24) betätigbar ist, dessen Ausgangswert als Zusatz-Störfeldsignal die Stellung des Schiebedaches (2) in der Auswerteeinrichtung (7) anzeigt.

13. Einrichtung nach Anspruch 11, dadurch gekennzeichnet, daß die Stellung des Schiebedaches (2) über eine optische Abtasteinrichtung (28, 29) feststellbar ist.

## Claims

1. Process for the compensation of a magnetic interference field during the determination of direction by means of a magnetic field probe in a vehicle, the field vector of the terrestrial magnetic field king continuously measured with the probe and evaluated for determining the respective direction of travel and, for compensating interfering influences of local magnetic interference fields, an interference field vector is calculated by means of calibration measurements, stored and in each case subtracted from the measured magnetic field vector in the subsequent measurements in order to obtain the terrestrial field vector, characterized in that, for a vehicle device (2, 3) which can be set to different defined states and which generates a magnetic interference field, in each case constant additional interference field vectors ($VS_H$) are calculated and stored, and in that as a function of the operating state of the respective vehicle device (2, 3) the associated additional interference field vector ($VS_H$) is called up from the memory (10) and is added to the interference field vector ($VS_1$) during the evaluation of the measurement results.

2. Process according to Claim 1, characterized in that an additional interference field vector ($VS_H$) is stored for a switched-on load current circuit in the vehicle and is added to the interference field vector as a function of the on-state of the load current circuit.

3. Process according to Claim 2, characterized in that the additional interference field vector ($VS_H$) corresponds to the magnetic interference field of a switched-on rearwindow heater (3). .

4. Process according to Claim 1, characterized in that additional interference field vectors for at least two defined positions are stored for a mechanically adjustable vehicle part (2), in that in each case the current position of the vehicle part (2) is sensed, and in that the associated additional interference field vector is added to the current interference field vector in accordance with the position thus determined.

5. Process according to Claim 4, characterized in that additional interference field vectors for at least two defined end positions are stored for a continuously adjustable vehicle part (2), in that in each case the current position is sensed, and in that an additional interference field vector is calculated by interpolation from the stored values of the additional interference field vectors and is taken into account for the measurement.

6. System for determining direction in a vehicle (1) having a magnetic field probe (4) which reacts to the terrestrial magnetic field, an evaluation system (7) which has at least one memory (9) for storing an interference field vector and one computing device (8) for updating the interference field vector and for calculating a corrected magnetic field vector from the measured magnetic field vector and the interference field vector, characterized in that a memory (10) for at least one fixed additional interference field vector ($VS_H$) associated with a defined operating state of an adjustable vehicle device (2, 3) is provided, in that a detector system (15, 18; 24; 28, 29) for sensing the respective operating state of the adjustable vehicle device (2, 3) is connected to the evaluation system (7) in such a manner that in each case an associated additional interference field vector is fed to the computing device (8) according to the operating state of the adjustable vehicle device.

7. System according to Claim 6, characterized in that, for a load current line (3) which is arranged in the vehicle (1) in the vicinity of the magnetic field probe (4) and which is only operated as and when required, an additional interference field vector ($VS_H$) for the onstate is stored, and in that the current flowing in the load current line is tapped via the detector system (15, 18) and is applied as an additional interference field signal to the evaluation system (7).

8. System according to Claim 7, characterized in that the detector system has an optocoupler (18), the input circuit of which is connected in parallel to the load current circuit (3) and the output circuit (21) of which is connected to the evaluation system (7).

9. System according to Claim 8, characterized in that the optocoupler (18) is connected to the load current circuit via a series resistor (19).

10. System according to Claim 8 or 9, characterized in that a blocking capacitor (20) is connected in parallel to the optocoupler (18).

11. System according to Claim 6, characterized in that the adjustable vehicle device is a sliding sun-roof (2), an additional interference field vector being stored for each of at least two defined positions of the sliding sun-roof, and in that the detector system has a position detector (24; 28, 29) which sends a measurement value for the current position of the sliding sun-roof (2) to the evaluation system (7).

12. System according to Claim 11, characterized in that a potentiometer (24) can be actuated with the transport system (22, 23) of the sliding sun-roof (2), the output value of which potentiometer indicates as an additional interference field signal the position of the sliding sun-roof (2) in the evaluation system (7).

13. System according to Claim 11, characterized in that the position of the sliding sun-roof (2) can be determined via an optical sensing system (28, 29).

**Revendications**

1. Procédé pour compenser un champ magnétique perturbateur lors de la détermination de la direction au moyen d'une sonde de champ magnétique dans un véhicule, selon lequel on mesure continûment le vecteur champ du champ magnétique terrestre au moyen de la sonde et on l'exploite pour la détermination de la direction d'avancement et selon lequel, pour compenser des influences parasites de champs magnétiques perturbateurs locaux par des mesures d'étalonnage, on détermine et on mémorise un vecteur champ perturbateur, que l'on déduit chaque fois du vecteur champ magnétique mesuré lors des mesures suivantes afin d'obtenir le vecteur champ terrestre, caractérisé en ce que, pour un dispositif du véhicule (2, 3) générant un champ magnétique perturbateur et pouvant être amené à différents états définis, on détermine et on mémorise des vecteurs champ perturbateur additionnel ($VS_H$) qui sont constants et que, suivant l'état de fonctionnement du dispositif (2, 3) concerné du véhicule, on appelle le vecteur champ perturbateur additionnel ($VS_H$) associé de la mémoire (10) et on l'additionne au vecteur champ perturbateur ($VS_1$) lors de l'exploitation des résultats de mesure.

2. Procédé selon la revendication 1, caractérisé en ce que l'on mémorise un vecteur champ perturbateur additionnel ($VS_H$) pour un circuit de courant de charge enclenché dans le véhicule et on additionne ce vecteur en fonction de l'état d'enclenchement du circuit de courant de charge au vecteur champ perturbateur.

3. Procédé selon la revendication 2, caractérisé en ce que le vecteur champ perturbateur additionnel (VS$_H$) correspond au champ magnétique perturbateur d'un chauffage de lunette arrière (3) enclenché.

4. Procédé selon la revendication 1, caractérisé en ce que, pour une partie de véhicule (2) déplaçable mécaniquement, on mémorise des vecteurs champ perturbateur additionnel pour au moins deux positions définies, que l'on explore la position actuelle de la partie de véhicule (2) et que l'on additionne le vecteur champ perturbateur additionnel correspondant à la position ainsi déterminée au vecteur champ perturbateur actuel.

5. Procédé selon la revendication 4, caractérisé en ce que, pour une partie de véhicule (2) déplaçable de façon continue, on mémorise des vecteurs champ perturbateur additionnel pour au moins deux positions de fin de course définies, que l'on explore la position actuelle de la partie de véhicule et que, par interpolation, on calcule un vecteur champ perturbateur additionnel à partir des valeurs mémorisées des vecteurs champ perturbateur additionnel et on tient compte du vecteur ainsi calculé pour la mesure.

6. Dispositif pour déterminer la direction dans un véhicule (1), comprenant une sonde de champ magnétique (4) réagissant au champ magnétique terrestre et un dispositif d'exploitation (7) qui comporte au moins une mémoire (9) pour mémoriser un vecteur champ perturbateur et une unité de calcul (8) pour actualiser le vecteur champ perturbateur et pour déterminer un vecteur champ magnétique corrigé à partir du vecteur champ magnétique mesuré et du vecteur champ perturbateur, caractérisé en ce qu'il comprend une mémoire (10) pour au moins un vecteur champ perturbateur additionnel (VS$_H$) qui est fixe et est coordonné à un état de fonctionnement défini d'un dispositif (2, 3) variable du véhicule et qu'un dispositif détecteur (15, 18; 24; 28, 29) pour l'exploration de l'état de fonctionnement instantané du dispositif variable (3, 3) du véhicule est combiné au dispositif d'exploitation (7) de manière que suivant l'état de fonctionnement du dispositif variable du véhicule, un vecteur champ perturbateur additionnel correspondant soit appliqué à l'unité de calcul (8).

7. Dispositif selon la revendication 6, caractérisé en ce qu'un vecteur champ perturbateur additionnel (VS$_H$) est mémorisé pour l'état d'enclenchement d'un conducteur (3) parcouru par un courant de charge qui est disposé dans le véhicule (1) à proximité de la sonde de champ magnétique (4) et est seulement mis en service en cas de besoin, et que le courant traversant ce conducteur est prélevé au moyen du dispositif détecteur (15, 18) et est appliqué en tant que signal de champ perturbateur additionnel au dispositif d'exploitation (7).

8. Dispositif selon la revendication 7, caractérisé en ce que le dispositif détecteur comprend un coupleur optoélectronique (18) dont le circuit d'entrée est connecté en parallèle avec le circuit de courant de charge (3) et dont le circuit de sortie (21) est relié au dispositif d'exploitation (7).

9. Dispositif selon la revendication 8, caractérisé en ce que le coupleur opto-électronique (18) est raccordé au circuit de courant de charge à travers une résistance série (19).

10. Dispositif selon la revendication 8 ou 9, caractérisé en ce qu'un condensateur de blocage (20) est connecté en parallèle avec le coupleur opto-électronique (18).

11. Dispositif selon la revendication 6, caractérisé en ce que le dispositif variable du véhicule est un toit ouvrant (3), pour chacune d'au moins deux positions duquel est mémorisé un vecteur champ perturbateur additionnel, et que le dispositif détecteur comporte un capteur de position (24; 28, 29) qui fournit une valeur de mesure pour la position actuelle du toit ouvrant (2) au dispositif d'exploitation (7).

12. Dispositif selon la revendication 11, caractérisé en ce que le dispositif de manœuvre (22, 23) du toit ouvrant (2) agit sur un potentiomètre (24, dont la valeur de sortie indique la position du toit ouvrant (2) en tant que signal de champ perturbateur additionnel au dispositif d'exploitation (7).

13. Dispositif selon la revendication 11, caractérisé en ce que la position du toit ouvrant (2) peut être déterminée au moyen d'un dispositif d'exploration optique (28, 29).

FIG 1

# FIG 2

# FIG 3

# FIG 4

# FIG 5

# FIG 6

# FIG 7

U

24 25 26 7

22

23

# FIG 8

30

27

30

28 30

+U 29 31 7